# EUROPEAN PATENT APPLICATION

(11) **EP 4 068 797 A1**
(43) Date of publication of application: **05.10.2022**
(21) Application number: 21165898.4
(22) Date of filing: 30.03.2021
(51) Int. Cl.: H04R 1/08, B60R 13/10

(54) **MICROPHONE ARRANGEMENT**

(71) Applicant: Harman Becker Automotive Systems GmbH, 76307 Karlsbad (DE)
(72) Inventor: KLEINHEINCZ, Zoltan Giang-Son, 1149 Budapest (HU)
(74) Representative: Westphal, Mussgnug & Partner, Patentanwälte mbB

(57) **Abstract**

A microphone arrangement comprises a license plate frame (30) configured onto securely attach a license plate (32) to a vehicle (10), and at least one microphone (20) mounted in or on the license plate frame.

## Description

### TECHNICAL FIELD

The disclosure relates to a microphone arrangement, in particular to a microphone arrangement for a vehicle.

### BACKGROUND

Microphones may need to be arranged on an exterior portion of an automobile in order to support a plurality of vehicle applications by detecting sound outside of the automobile. Such microphones may need to be impervious to various environmental conditions such as wind, rain, snow, etc. Additionally, such microphones may be positioned on the vehicle exterior and should provide an appealing aesthetic appearance for vehicle occupants by not marring the exterior styling of the vehicle.

### SUMMARY

A microphone arrangement includes a license plate frame configured to securely attach a license plate to a vehicle, and at least one microphone mounted in or on the license plate frame.

Other systems, methods, features and advantages will be or will become apparent to one with skill in the art upon examination of the following detailed description and figures. It is intended that all such additional systems, methods, features and advantages be included within this description, be within the scope of the invention and be protected by the following claims.

### BRIEF DESCRIPTION OF THE DRAWINGS

The arrangement may be better understood with reference to the following description and drawings. The components in the figures are not necessarily to scale, emphasis instead being placed upon illustrating the principles of the invention. Moreover, in the figures, like referenced numerals designate corresponding parts throughout the different views.

Figure 1 schematically illustrates a vehicle comprising external microphones.

Figure 2 schematically illustrates a microphone arrangement according to one example.

Figure 3 schematically illustrates an exploded view of a license plate arrangement.

Figure 4 schematically illustrates an external microphone according to one example.

### DETAILED DESCRIPTION

As required, detailed embodiments of the present invention are disclosed herein; however, it is to be understood that the disclosed embodiments are merely examples of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

It is recognized that directional terms that may be noted herein (e.g., "upper", "lower", "inner", "outer", "top", "bottom", etc.) simply refer to the orientation of various components of an arrangement as illustrated in the accompanying figures. Such terms are provided for context and understanding of the disclosed embodiments.

Due to the development of autonomous driving in the automotive industry, it has become necessary to detect sounds from the outside (or external environment) of a vehicle (i.e., traffic, pedestrians, emergency sirens, etc.). This may in turn necessitate the installation of any number of microphones on an exterior of a vehicle. In order to function properly, the microphones not only have to withstand environmental conditions, such as wind, water, dust, mud, ice, etc. The external microphones also have to be arranged on the exterior of the vehicle such that they capture the desired sound and, at the same time, capture only little unwanted sound such as, e.g., wind noise. The external microphone arrangement as disclosed herein is essentially arranged to capture desired sound while being protected against, and preventing the capture of, unwanted sound. In addition, the disclosed external microphone arrangement can be easily integrated in any type or make of vehicle without impairing its appearance. These aspects and others will be discussed in more detail below.

The external microphones 20 as set forth herein may be arranged on a frame that is configured to mount a license plate to a vehicle 10. License plates are usually mounted onto a vehicle by means of a base plate that is fixed on the vehicle, and a license plate frame. The base plate is securely attached to the vehicle, e.g., by means of screws, bolts, or any other suitable fastening elements. The license plate frame is securely attached to the base plate, e.g., by means of screws, bolts, or any other suitable fastening elements. The license plate is arranged between the frame and the base plate such that the frame, when attached to the base plate, presses the license plate against the base plate in order to hold the license plate in its desired position.

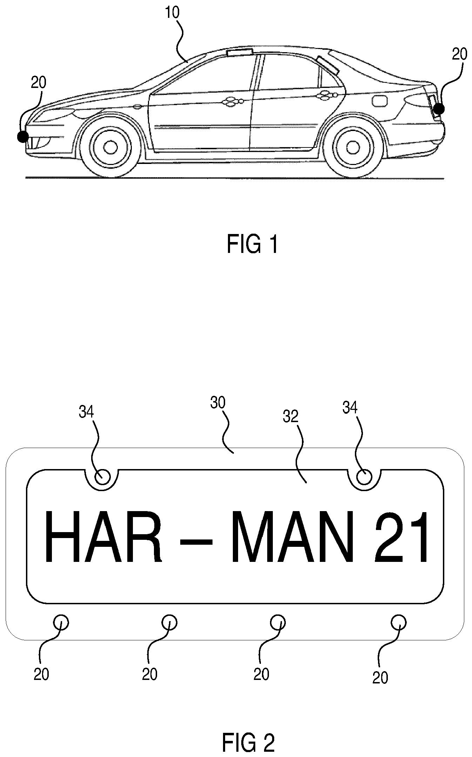

Every vehicle generally requires two license plates, one arranged at the front and the other arranged at the rear of the vehicle in defined positions. This is exemplarily illustrated in Figure 1 which illustrates a side view of a vehicle 10. At least one external microphone 20 arranged in or on a license plate frame is arranged at the front of the vehicle 10, and at least one external microphone 20 arranged in or on a license plate frame is arranged at the back of the vehicle 10 when the license plate frames are mounted on the vehicle 10.

A license plate frame 30 is exemplarily illustrated in Figure 2. The license plate frame 30 has a rectangular shape and provides an opening through which the license plate 32 is visible. The license plate frame 30 comprises two or more mounting units 34. The two or more mounting units 34 may comprise through holes, for example. Screws or bolts (not specifically illustrated in Figure 2) can be inserted through the through holes to securely attach the license plate frame 30 to a base plate (base plate not specifically illustrated in Figure 2), for example. The holes illustrated in Figure 2, however, are only examples. A license plate frame 30 can be attached to a base plate in any other suitable way. According to another example, the two or more mounting units 34 comprise clamps or brackets. Any other suitable mounting units 34 are also possible.

At least one microphone 20 is arranged on the license plate frame 30 or is integrated in the license plate frame 30. In Figure 2, four microphones 20 are exemplarily illustrated. The number of microphones 20, however, generally depends on the application for which sound is to be captured by the microphones 20. That is, for some applications it might be sufficient to provide only one microphone 20 on or in the license plate frame 30. In this way, one external microphone 20 could be provided at the front of the vehicle 10 and another external microphone 20 could be provided on the rear of the vehicle 10. It is, however, also possible to provide an array of two or more microphones 20 on or in each license plate frame 30.

Integrating external microphones 20 in a vehicle 10 is generally a challenge. The microphones 20 need to be arranged in suitable positions. At the same time, the integration of external microphones 20 should not significantly change the appearance of the vehicle. The integration of external microphones, however, generally requires a certain amount of space. As different vehicles of different types and brands generally have a significantly different appearance, external microphones are usually arranged in different positions that vary for different vehicles.

By arranging the external microphones 20 on or in the license plate frame 30, the position of the external microphones 20 can be standardized for all vehicles. It is even possible to retrofit old vehicles with external microphones 20. Vehicles 10 do not need to be specifically designed to accommodate external microphones 20, as the external microphones 20 are arranged in or on the license plate frames 30 required for virtually every vehicle 10. The size of the license plate 32 and, therefore, the size of the license plate frame 30 is generally standardized, at least within a country. The size of the license plate 32 may also vary from country to country. However, this difference is generally only marginal and has no influence on the arrangement of the microphones 20 on or in the license plate frame 30.

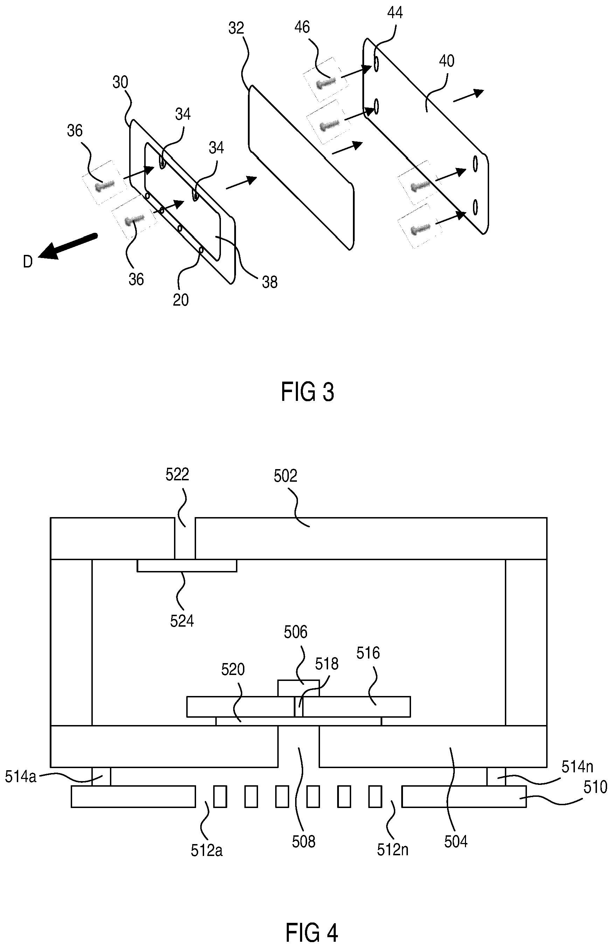

The positions of the license plates 32 at the front and the rear of the vehicle 10 are ideal for positioning external microphones 20. Sound can be captured from all directions at the front and at the rear of the vehicle. Further, as the license plates 32 are generally flat, and are arranged perpendicular to the driving direction D (see Figure 3), the microphones 20 arranged on or in the license plate frame 30 are positioned in a stagnation point at which less wind noise will be captured.

Now referring to Figure 3, a license plate arrangement is schematically illustrated. The arrangement comprises a base plate 40 that is configured to be mounted on a vehicle. The base plate 40 comprises second mounting units 44. In the example illustrated in Figure 3, the second mounting units 44 comprise holes. Second screws 46 can be inserted into the holes in order to attach the base plate 40 to a vehicle. The second mounting units 44, however, can be implemented in any other suitable way, e.g., by means of clamps or brackets. A license plate 32 is arranged between the base plate 40 and a license plate frame 30. The license plate frame 30 comprises an opening 38 through which the license plate 32 is visible. The license plate frame 30 comprises first mounting units 34. In the example illustrated in Figure 3, the first mounting units 34 comprise holes. First screws 36 can be inserted into the holes in order to attach the license plate frame 30 to the base plate 40. The first mounting units 34, however, can be implemented in any other suitable way, e.g., by means of clamps or brackets. The license plate frame 30 presses the license plate 32 against the base plate 40.

A hole or recess may be provided in the license plate frame 30 for receiving the external microphone 20. The microphone 20 may include an outer grille cover, which is mounted on the license plate frame 30. In one example, the grille cover includes a first plurality of holes to minimize the amount of wind generated noise seen by the microphone at higher vehicle speeds, while the cover has an overall large opening to enable the sound to pass without any acoustic transformation. A microphone element may be mounted on a printed circuit board (PCB) that is located inside the license plate frame 30. The opening of the cover may enable the exterior acoustic signal to pass to the microphone element.

An acoustic membrane may be mounted on the opposite side of the printed circuit board. The acoustic membrane protects the microphone from water and dust. The acoustic membrane may be arranged to protect the microphone element against a direct jet spray of water. The grille design also protects the microphone element against a direct water jet spray. The external microphone apparatus may provide venting in order to enable liquid to pass through it and maintain its acoustic functionality. This may be accomplished by providing a gap between the grille and microphone cover. Water and debris can flow through the grille and then be washed away through the gap. The venting membrane as positioned on the microphone element side of the housing provides for the relief of pressure caused by climatic changes.

An exemplary microphone 20 is schematically illustrated in Figure 4. Figure 4 depicts a cross-sectional view of an exemplary microphone 20. The microphone 20 may include a housing 502, a cover 504, and at least one microphone element 506 (hereafter "the microphone element 506"). The microphone 20 is generally configured to be mounted on or in a license plate frame 30. For example, the microphone 20 may be positioned on a bottom crossbar of a license plate frame 30 (see, e.g., Figure 2). The microphone 20, however, can be arranged in any desired position on the license plate frame 30. It is recognized that the portion of the license plate frame 30 that houses the microphone 20 may define a cavity (not shown) that is suitable to receive the microphone 20. The microphone element 506 arranged inside the housing 502 is generally configured to detect ambient noise external to the vehicle 10 and to provide the detected ambient noise to any controller (or processor, not shown) positioned in or about the vehicle 10. The detected ambient noise may be provided to a controller wirelessly or via a wired connection, for example.

The housing 502 and the cover 504 can cooperate with one another to surround the microphone element 506. The cover 504 may be orientated to face out, and away from the license plate frame 30 into the environment that surrounds the vehicle 10. In one example, the microphone element 506 may be implemented as a Micro-Electro-Mechanical Systems (MEMS) microphone. The cover 504 may define a first opening 508 in order to enable the microphone element 506 to detect audio external to the vehicle 10. The first opening 508 enables the entry of acoustic sound without transforming the sound prior to receipt by the microphone element 506. A grilled cover 510 may be positioned in front of the cover 504. In one example, the grilled cover 510 may be formed of sheet metal. The grilled cover 510 may be axially spaced (or offset) from the cover 504.

The grilled cover 510 may or may not extend in parallel with respect to the cover 504. For example, the grilled cover 510 may be straight. Alternatively, the grilled cover 510 may define at least one plane that extends with a radius with respect to the cover 504. The grilled cover 510 may define a plurality of audio holes 512a - 512n in order to enable audio to enter into the first opening 508 for receipt by the microphone element 506. The diameter for each audio hole 512 may be, for example, 0.5 mm or smaller. The grilled cover 510 may include mounting portions 514a and 514b to couple the grilled cover 510 to the cover 504. It is recognized that the cover 504 and the mounting portions 514a and 514b may be integrally formed with one another.

A printed circuit board (PCB) 516 may support the microphone element 506 and may include electrical traces and bonds in order to electrically couple with the microphone element 506. The PCB 516 may define a second opening 518 in order to enable ambient sound that passes through the plurality of audio holes 512a - 512n and through the first opening 508 to be received by the microphone element 506. An acoustic membrane 520 may be positioned between the PCB 516 and the cover 504. The acoustic membrane 520 may be configured to enable the audio to pass therethrough and into the second opening 518 for receipt by the microphone element 506.

The acoustic membrane 520 may be configured to serve as a barrier to prevent the entry of external debris from the vehicle 10 into an interior volume of the housing 502. For example, the acoustic membrane 520 may protect the microphone element 506 from water and/or dust or other debris. As shown, the microphone element 506 may be positioned on one side of the PCB 516 and the acoustic membrane 520 may be positioned on an opposite side of the PCB 516. It is recognized that the acoustic membrane 520 may require protection against a direct spray of water (e.g., water delivered to the acoustic membrane that exceeds a predetermined pressure value). Therefore, the grilled cover 510 may be configured to prevent or reduce the pressure level of the fluid that the acoustic membrane 520 is exposed to.

The housing 502 may define a third opening 522 on an exterior portion thereof. The third opening 522 may be positioned on a side of the housing 502 that is generally positioned within proximity of the microphone element 506. A venting membrane 524 may be positioned within a volume defined internally from within the housing 502 and may be further positioned directly over or on the third opening 522. The venting membrane 524 can provide relief from pressure resulting from climatic or atmospheric changes that take place outside of the vehicle 10.

The housing 502 of the microphone 20 may be formed in or on the license plate frame 30. For example, the cover 504 may be formed by an outer surface of the license plate cover 30 that faces away from the vehicle 10. According to one example, the housing 502 is integrally formed together with the license plate frame 30. In this way, the microphone 20 can be easily integrated into the license plate frame 30 in a space-saving manner while, at the same time, remaining visually unobtrusive. The microphone 20 as described with respect to Figure 4, however, is only one example. The microphone 20 may be implemented in or on the license plate frame 30 in any other suitable way.

The description of embodiments has been presented for purposes of illustration and description. Suitable modifications and variations to the embodiments may be performed in light of the above description or may be acquired from practicing the methods. The described arrangements are exemplary in nature, and may include additional elements and/or omit elements. As used in this application, an element recited in the singular and proceeded with the word "a" or "an" should not be understood as excluding the plural of said elements, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The described systems are exemplary in nature, and may include additional elements and/or omit elements. The subject matter of the present disclosure includes all novel and non-obvious combinations and sub-combinations of the various systems and configurations, and other features, functions, and/or properties disclosed. The following claims particularly disclose subject matter from the above description that is regarded to be novel and non-obvious.

## Claims

1. A microphone arrangement comprising:
a license plate frame (30) configured to securely attach a license plate (32) onto a vehicle (10); and
at least one microphone (20) mounted in or on the license plate frame (30).

2. The microphone arrangement of claim 1, wherein the license plate frame (30) has a rectangular shape, and the at least one microphone (20) is arranged in or on a bottom crossbar of the license plate frame (30).

3. The microphone arrangement of claim 1 or 2, wherein each of the at least one microphone (20) comprises:
a microphone element (506);
a housing (502); and
a cover (504), wherein
the housing (502) and the cover (504) cooperate with one another to surround the microphone element (506), and
the cover (504) is formed by an outer surface of the license plate frame (30).

4. The microphone arrangement of any of claims 1 to 3, wherein a portion of the license plate frame (30) that houses the at least one microphone (20) defines at least one cavity, and each of the at least one microphone (20) is arranged in one of the at least one cavity.

5. The microphone arrangement of claim 3 or 4, wherein the cover (504) defines a first opening (508) in order to enable the respective microphone element (506) to detect sound external to the license plate frame (30).

6. The microphone arrangement of any of claims 3 to 5, wherein each of the at least one microphone (20) further comprises an outer grille cover (510), which is mounted onto the license plate frame (30), wherein the grille cover (510) is configured to protect the respective microphone element (506) against direct water jet spray, and to minimize the amount of wind generated noise seen by the microphone (20).

7. The microphone arrangement of claim 6, wherein each grille cover (510) defines a plurality of audio holes (512a - 512n) in order to enable sound to enter into the first opening 508 for receipt by the microphone element 506.

8. A vehicle (10) comprising at least one of:
a first microphone arrangement according to any of claims 1 to 7 mounted on the rear of the vehicle (10); and
a second microphone arrangement according to any of claims 1 to 7 mounted on the front of the vehicle (10).

9. The vehicle (10) of claim 8, wherein each of the at least one microphone (20) is orientated to face out and away from the respective license plate frame (30) into the environment that surrounds the vehicle (10).

10. The vehicle (10) of claim 8 or 9, further comprising at least one of:
a first base plate (40) mounted to the rear of the vehicle (10), wherein the license plate frame (30) of the first microphone arrangement is mounted on the first base plate (40); and
a second base plate (40) mounted on the front of the vehicle (10), wherein the license plate frame (30) of the second microphone arrangement is mounted on the first base plate (40).
